# EUROPÄISCHE PATENTSCHRIFT

(11) **EP 1 577 515 B1**
(45) Veröffentlichungstag und Bekanntmachung des Hinweises auf die Patenterteilung: **12.09.2007**
(21) Anmeldenummer: 05005624.1
(22) Anmeldetag: 15.03.2005
(51) Int. Cl.: F01N 3/021, F01N 3/022

(54) **Vorrichtung zum Reinigen von Fahrzeugabgasen**
Device for purifying exhaust gas of vehicles
Dispositif d'épuration des gaz d'échappement des véhicules

(30) Priorität: 18.03.2004 DE 102004013458
(43) Veröffentlichungstag der Anmeldung: 21.09.2005
(73) Patentinhaber: ET US Holdings LLC, Wilmington DE 19801 (US)
(72) Erfinder: Noller, Christoph, 86343 Königsbrunn (DE)
(74) Vertreter: Kitzhofer, Thomas

(56) Entgegenhaltungen:
- EP-A- 1 236 872
- WO-A-03/093657
- DE-A1- 2 723 532
- PATENT ABSTRACTS OF JAPAN Bd. 013, Nr. 573 (M-909), 19. Dezember 1989 (1989-12-19) & JP 01 240716 A (NGK INSULATORS LTD), 26. September 1989 (1989-09-26)

## Beschreibung

Die Erfindung betrifft eine Vorrichtung zum Reinigen von Fahrzeugabgasen, insbesondere ein Dieselrußfilter, mit einem gasdurchströmten Filterkörper, der auch Substrat- oder Monolithkörper genannt wird, mit einer einströmseitigen und einer ausströmseitigen Stirnfläche sowie einer Umfangsfläche, einem den Filterkörper umgebenden Gehäuse sowie am Außenrand wenigstens einer Stirnfläche zwischen dieser und dem Gehäuse vorgesehenen, umfangsmäßig voneinander beabstandeten, ringsegmentartigen, axial komprimierten Klemmteilen.

Derartige Vorrichtungen sind beispielsweise katalytische Abgasreinigungs― vorrichtungen oder, hierzu bezieht sich die Erfindung insbesondere, Dieselrußfilter.

Die Filterkörper werden durch miteinander verklebte, stranggepreßte, einteilige, monolithische Einzelkörper, insbesondere aus SiC-Material zusammengesetzt, wobei diese länglichen Einzelkörper, wie sie auf dem Markt erhältlich sind, vorzugsweise einen quadratischen Querschnitt besitzen. Die Einzelkörper haben auf einer Stirnseite zahlreiche in einem Sackloch endende, wabenförmig angeordnete, insbesondere im Querschnitt quadratische Einströmkanäle und hierzu benachbarte, nicht unmittelbar strömungsverbundene Ausströmkanäle, welche durch ebenfalls wabenförmige, genauer im Querschnitt quadratische, von der gegenüberliegenden Stirnwand ausgehende Sacklöcher gebildet sind. Das Abgas strömt von der einströmseitigen Stirnwand in die zahlreichen Kanäle, diffundiert durch die benachbarte Wand zu den Ausströmkanälen, wobei im Einströmkanal die Rußpartikel zurückgehalten werden. Die Abgaskatalysatoren sind entsprechend mit beschichteten Filterkörpern aufgebaut.

Eine gattungsgemäße Vorrichtung ist aus der EP 1 236 872 A1 bekannt. Hierbei wird ein Filterkörper im Gehäuse dadurch gelagert, daß an seinen beiden axialen Enden, genauer an dem Übergang zwischen Stirnseiten und Umfangswand, ein Drahtgestrick- oder Drahtgewirkring positioniert und zwischen dem Filterkörper und dem Gehäuse geklemmt ist. Über die beiden Drahtgestrick-oder Drahtgewirkringe wird dann die zur Halterung des keramischen, üblicherweise wabenförmig strukturierten Filterkörpers notwendige Kraft übertragen. Der Drahtgestrick- oder Drahtgewirkring hat Fortsätze, die sich vor die zugeordnete Stirnfläche erstrecken. Diese Abschnitte werden im Folgenden Klemmteile genannt.

Aufgabe der Erfindung ist es, eine Vorrichtung zum Reinigen von Fahrzeugabgasen, insbesondere einen Dieselrußfilter, zu schaffen, die günstig in ihrer Herstellung ist und einen hohen Wirkungsgrad bezüglich der Reinigungs- bzw. Filterwirkung besitzt.

Dies wird bei einer Vorrichtung der eingangs genannten Art dadurch erreicht, daß der Filterkörper aus länglichen, quaderförmigen, einstückigen, monolithartigen Einzelkörpern zusammengesetzt und die Umfangsfläche des Filterkörpers mechanisch bearbeitet ist, wobei die Klemmteile im Bereich von solchen am Außenumfang des Filterkörpers liegenden Einzelkörpern positioniert sind, die stärker als andere am Außenumfang des Filterkörpers liegende Einzelkörper bearbeitet sind.

Die erfindungsgemäße Vorrichtung sieht nicht einen aus einem Teil, wie im Stand der Technik vorgeschlagenen Filterkörper vor, sondern einen aus mehreren, üblicherweise im Querschnitt quadratischen Einzelkörpern zusammengesetzten Filterkörper. Diese Einzelkörper sind in sich einstückige Teile, die mit anderen verklebt werden. Der entstehende, große Filterkörper wird am Außenumfang mechanisch spanend bearbeitet. Die monolithartigen Einzelkörper sind Massenprodukte, so daß das Zusammensetzen der Filterkörper aus Einzelkörpern und die mechanische außenseitige Bearbeitung billiger kommt als die Einzelfertigung eines einzigen Filterkörpers mit der endgültigen, gewünschten Außengeometrie. Durch die Bearbeitung werden aber die am Außenumfang liegenden Einzelkörper mehr oder weniger stark in Ihrer Querschnittsfläche reduziert. Der Strömungsdurchsatz, also die Leistungsfähigkeit des bearbeiteten Einzelkörpers, wird durch die Bearbeitung selbst überproportional reduziert verglichen mit dem Verlust an Querschnittsfläche durch die Bearbeitung. Die Erfindung sieht nun vor, daß die Klemmteile im Bereich von solchen am Außenumfang liegenden Einzelkörpern positioniert werden, die stärker als andere bearbeitet sind, das heißt durch die Bearbeitung übermäßig stark in ihrem Strömungsdurchsatz und damit in ihrer Filterwirkung beschnitten wurden. Wenn die Klemmkörper an diesen, ohnehin in ihrer Leistung stark eingeschränkten Einzelkörpern stirnseitig anliegen, um einen weiteren Teil der Stirnseite abzudecken und damit die wirksame Querschnittsfläche zu verringern, ist dies für die Leistungsfähigkeit des gesamten Filterkörpers weniger verlustreich als die Anordnung bei kaum oder überhaupt nicht mechanisch bearbeiteten Einzelkörpern. Im Bereich der am wenigsten bearbeiteten Einzelkörper sind die Klemmteile folglich nicht vorgesehen.

Die Erfindung geht in der bevorzugten Ausführungsform davon aus, daß vor der Bearbeitung des Filterkörpers sämtliche Einzelkörper eine gleiche Querschnittsfläche und insbesondere auch dieselben Außenabmaße im Querschnitt besaßen. Vorzugsweise liegen die Klemmteile folglich an jenen am Außenumfang liegenden Einzelkörpern an, die eine geringere Querschnittsfläche als andere am Außenumfang liegende Einzelkörper haben.

Die Klemmteile sollten also nicht die am wenigsten bearbeiteten, am Umfang liegenden Einzelkörper abdecken, und erst recht nicht unbearbeitete Einzel― körper.

Es ist in diesem Zusammenhang natürlich bevorzugt, daß die Klemmteile an wenigstens denjenigen am Außenumfang liegenden Einzelkörpern anliegen, deren Querschnittsfläche sogar am geringsten ist. Da die Querschnittsfläche dieser am stärksten bearbeiteten Einzelteile so klein sein kann, daß die Lagerung des Filterkörpers ausschließlich über diese im Querschnitt kleinsten Einzelkörper unmöglich ist, dürfen die Klemmteile auch an benachbarten, stark bearbeiteten Einzelkörpern anliegen. Geachtet werden sollte dabei darauf, daß die Klemmteile nur an solchen am Außenumfang liegenden Einzelkörpern anliegen, die eine durch Bearbeitung zu mehr als 50 % reduzierte Querschnittsfläche besitzen. Die eine größere Querschnittsfläche besitzenden Einzelkörper sind in ihrer Leistungsfähigkeit zu "wertvoll", als daß noch Abschnitte der Stirnseite abgedeckt werden sollten.

Die Klemmteile sind vorzugsweise aus Metallfasern, z. B. Drahtgestrick oder Drahtgewirk.

Das Drahtgestrick oder ―gewirk kann mit eingelegten Fasern und/oder Dichtstoffen versehen sein, also auch noch eine Dichtwirkung besitzen.

Die segmentartigen Klemmteile sind Abschnitte eines Rings und werden über seitlich außerhalb der Klemmteile angeordneten Ringabschnitte miteinander verbunden. Die die Klemmteile verbindenden Abschnitte können, mit Sicht auf die den Klemmteilen zugeordnete Stirnfläche, seitlich außerhalb der Stirnfläche liegen, also insbesondere zwischen der Umfangsfläche des Filterkörpers und dem Gehäuse. In diesem Bereich wird eine seitliche Klemmkraft zwischen dem Gehäuse und dem Filterkörper übertragen, wobei optional auch noch eine axiale Klemmkraft zwischen der Stirnwand des Gehäuses, den Klemmteilen und der zugeordneten Stirnfläche des Filterkörpers wirkt.

Gemäß einer bevorzugten Ausführungsform der Erfindung erstrecken sich die Klemmteile nur auf maximal 1/3 des Umfangs des Filterkörpers.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Längsschnitt durch eine erfindungsgemäße Vorrichtung gemäß einer ersten und einer zweiten Ausführungsform (obere bzw. untere Hälfte), die als Dieselrußfilter ausgeführt sind,
- Figur 2 eine Querschnittsansicht durch das Dieselrußfilter nach Figur 1,
- Figur 3 eine Querschnittsansicht durch ein Dieselrußfilter mit einer anderen Querschnittsgeometrie,
- Figur 4 eine Draufsicht auf einen bei der Erfindung einsetzbaren Drahtgestrick- oder Drahtgewirkrings,
- Figur 5 eine Schnittansicht längs der Linie V-V durch den Drahtgestrick-oder Drahtgewirkring gemäß Figur 4, und
- Figur 6 einen Längsschnitt durch eine erfindungsgemäße Vorrichtung gemäß zweier weiterer Ausführungsformen (obere bzw. untere Hälfte), die als Dieselrußfilter ausgeführt sind.

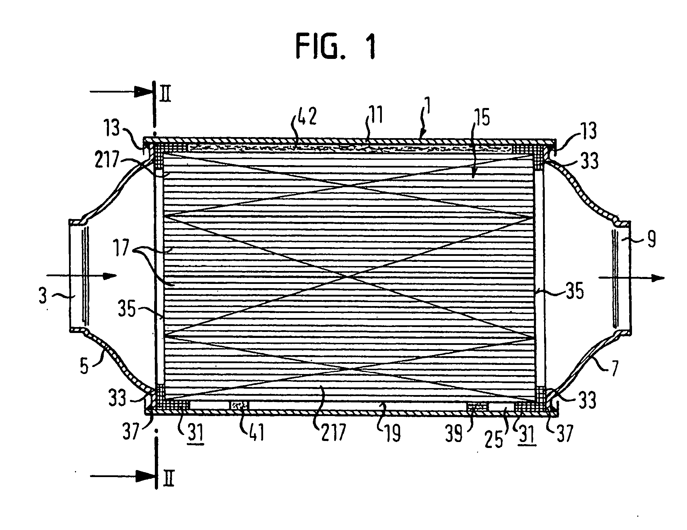

In Fig. 1 ist eine Vorrichtung zum Reinigen von Fahrzeugabgasen dargestellt, die im Abgasstrang des Fahrzeugs liegt. Die gezeigte Vorrichtung ist ein Dieselrußfilter, sie kann jedoch auch entsprechend als Katalysator ausgebildet sein.

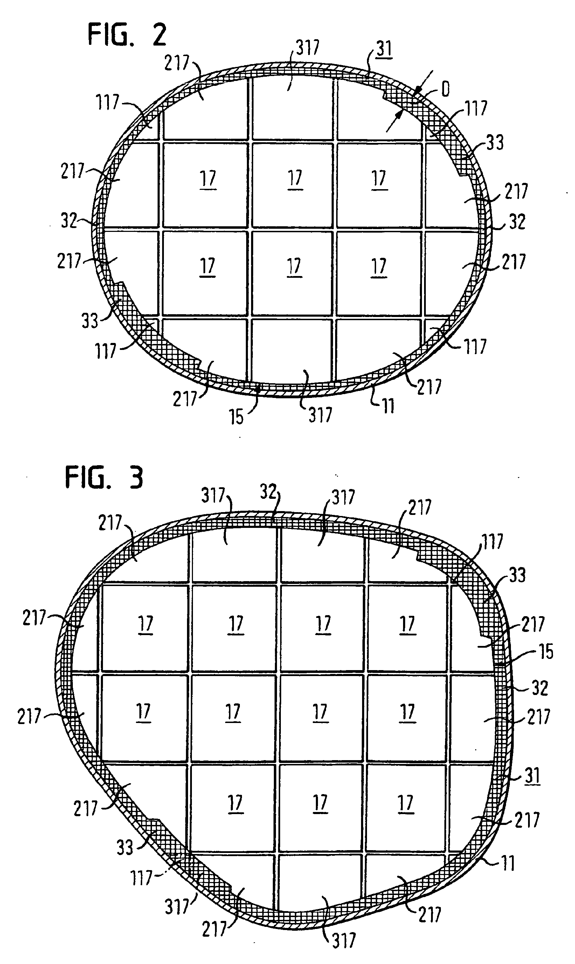

Die Vorrichtung hat ein langgestrecktes Gehäuse 1, das aus mehreren Teilen zusammengesetzt ist, nämlich einem mit einer Einströmöffnung 3 versehenen trichterförmigen Abschnitt 5, einem auf dem entgegengesetzten Ende vorgesehenen trichterförmigen Abschnitt 7 mit einer Ausströmöffnung 9 sowie eine Umfangswand 11, die durch ein umgeformtes Rohr oder durch Abkanten eines Bleches gebildet ist. Die trichterförmigen Abschnitte 5, 7 sind mit der Umfangswand 11 verschweißt, indem beide trichterförmigen Abschnitte 5, 7 etwas in das Innere der Umfangswand 11 ragen (siehe Fig. 2). Die Schweißnähte tragen das Bezugszeichen 13.

Im Inneren des Gehäuses 1 ist ein Filterkörper 15 untergebracht, der aus mehreren quaderförmigen einstückigen Einzelkörpern 17, 117, 217, 317 zusammengesetzt ist. Die Einzelkörper 17 ― 317 sind insbesondere stranggepreßte SiC-Körper, deren Länge der Länge des gesamten Filterkörpers 15 entspricht und die ein stabförmiges Aussehen haben. Die Einzelkörper 17 - 317 bestehen insbesondere aus im Querschnitt identischen quadratischen Einzelkörpern, die randflächenseitig mit benachbarten Einzelkörpern 17 ― 317 verklebt sind.

Fig. 2 zeigt eine Schnittansicht mit Blick auf eine Stirnfläche 35 des in Fig. 1 gezeigten Filterkörpers 15. Die Einzelkörper 17 ― 317 werden werkseitig mit unbearbeiteter Außenoberfläche zugeliefert und nach dem Aneinanderkleben zum Filterkörper 15 umfangsseitig mechanisch (spanend) bearbeitet, so daß die Umfangsfläche 19 oval verläuft. Das bedeutet, der gesamte sich ergebende runde Außenumfang des Filterkörpers 15 ist auf der Umfangsfläche 19 bearbeitet.

Der Filterkörper 15 besteht aus innenliegenden, an Ihrer Umfangsfläche nicht bearbeiteten Einzelkörpern 17 sowie am Außenumfang liegenden, bearbeiteten Einzelkörpern 117, 217 und 317. Die Einzelkörper 117 sind diejenigen am Außenumfang liegenden Einzelkörper, die am stärksten bearbeitet sind und die die geringste Querschnittsfläche besitzen. Auch die an die Einzelkörper 117 unmittelbar angrenzenden, am Außenumfang liegenden Einzelkörper 217 sind relativ stark bearbeitet und haben eine, bezogen auf den Ausgangszustand (siehe Einzelkörper 17), um mehr als 50 % reduzierte Querschnittsfläche. Die am Außenumfang liegenden Einzelkörper 317 sind hingegen relativ gering bearbeitet worden, ihre Querschnittsfläche ist um weniger als 50 % gegenüber ihrem Ursprungszustand reduziert.

Die Einzelkörper 17 - 317 haben zahlreiche im Querschnitt wabenförmige oder quadratische Einströmkanäle, die sich mit im wesentlichen quadratischen Wänden abwechseln, so daß sich eine Art Wabenstruktur oder Schachbrettmuster ergibt. Die Einströmkanäle erstrecken sich tief in die Einzelkörper 17 - 317 und enden darin jeweils als Sackloch. Von der gegenüberliegenden Stirnseite 35 aus (Ausströmseite) ragen Ausströmkanäle in die Wände und enden dort ebenfalls als Sacklöcher. Es ergibt sich also auf der gegenüberliegenden Stirnseite 35 eine Ansicht mit einem ähnlichen Waben- oder Schachbrettmuster, nur versetzt zu dem Muster auf der Einströmseite.

Die effektive Strömungsfläche des gesamten Filterkörpers 15 setzt sich aus der Summe der effektiven Strömungsflächen der Einzelkörper 17 - 317 zusammen, wobei die Filterkapazität hauptsächlich durch die Kapazität der Einzelkörper 17 und 317 bestimmt ist.

Die Umfangswand 11 des Gehäuses 1 umgibt den in Fig. 1 dargestellten Filterkörper 15 mit einem gleichmäßig breiten Luftspalt 25, der etwas mehr als drei Millimeter Dicke besitzt. Das bedeutet, die Umfangswand 11 folgt dem Filterkörper 15 auf dessen Außenkontur mit gleichmäßigem Abstand.

Die Lagerung des Filterkörpers 15 im Gehäuse 1 erfolgt durch eine axiale und/oder seitliche (radiale) Klemmung im Gehäuse 1. An den axialen Enden des Filterkörpers 15 ist ein in Umfangsrichtung durchgehender elastischer Dichtkörper in Form eines Drahtgestrick- oder Drahtgewirkrings 31 angeordnet, der mit Fasern oder Dichtmaterial versehen ist. Dieser Drahtgestrick- oder Drahtgewirkring 31 liegt seitlich zwischen der Umfangsfläche 19 des Filterkörpers 15 und der Innenseite der Umfangswand 11 (Fig. 1). Der Drahtgestrick- oder Drahtgewirkring 31 hat zwei voneinander umfangsmäßig beabstandete, ringsegmentartige Klemmteile 33, die am Außenrand der Stirnseite 35 des Filterkörpers 15, zwischen dieser und einem ebenen, ringförmigen Flanschabschnitt 37 des zugeordneten trichterförmigen Abschnitts 5, 7 geklemmt sind. Die Klemmteile 33 sind Abschnitte des Drahtgestrick- oder Drahtgewirkrings 31, sie haben nur eine geringe seitliche Dicke D von wenigen Millimetern und sind durch Abschnitte 32 des Ringes 31 miteinander verbunden. Die Klemmteile 33 können Abschnitte des einzelnen Drahtes sein, der auch den Ring 31 bildet. Eine andere Ausführungsform sieht vor, daß separate Drähte für den Ring 31 und für die Klemmteile 33 vorgesehen sind, die aber an einem Übergang miteinander durch Stricken oder Wirken verbunden sind.

Wie Fig. 2 zu entnehmen ist, sind zwei Klemmteile 33 am Drahtgestrick- oder Drahtgewirkring 31 angeformt, die sich im Wesentlichen bezogen auf den Flächenschwerpunkt gegenüber liegen. Die Klemmteile 33 sind dabei so angeordnet, daß ihre Mitte an den am stärksten bearbeiteten Einzelkörpern 117 anliegen und diese stirnseitig teilweise abdecken, so daß deren Durchströmfläche verringert wird. Die Klemmteile 33 setzen sich aber auch in die benachbarten Einzelkörper 217 fort, wobei sie sich aber nicht längs des gesamten Außenumfangs der Einzelkörper 217 erstrecken, so daß nur ein Teilabschnitt der Einzelkörper 217 am Außenrand durch die Klemmteile 33 abgedeckt wird.

Falls der Filterkörper 15 fast ausschließlich durch axiale Klemmung im Gehäuse 1 positioniert werden soll, beträgt z. B. die Klemmkraft, die über die Klemmteile 33 auf den Filterkörper 15 ausgeübt wird, bei Umgebungstemperatur etwa 5.000 Newton. Die seitliche Klemmkraft, die über die Umfangswand 11 auf die Umfangsfläche 19 des Filterkörpers 15 ausgeübt wird, ist im Vergleich zur axialen Vorspannkraft äußerst gering (Flächenpressung ca. 0,05 N/mm²).

Der umfangsmäßig geschlossene, zwischen der Umfangswand 11 und der Umfangsfläche 19 liegende Drahtgestrick- oder Drahtgewirkring 31 dient der Verhinderung von Abgas-Bypasströmen. Falls der Drahtgestrick- oder Drahtgewirkring 31 hierzu nicht ausreichen sollte, können möglichst nahe an den Stirnflächen 35 des Filterkörpers 15 auch noch Dichtstreifen 39 oder eine Dichtpaste 41 (siehe untere Hälfte in Fig. 1) vorgesehen sein, die jeweils umfangsmäßig geschlossen um den Filterkörper 15 herumlaufen. Alternativ könnte zur thermischen Isolation auch eine Isolationsmatte oder Quellmatte 42 (siehe obere Hälfte in Fig. 1) in diesem Bereich vorgesehen sein.

Bei der Ausführungsform nach Fig. 3 hat der Filterkörper 15 mehrere unbearbeitete Einzelkörper 17 sowie am Außenumfang liegende, zu weniger als 50 % in der Querschnittsfläche reduzierte, bearbeitete Einzelkörper 317 und zu mehr als 50 % in der Querschnittsfläche reduzierte Einzelkörper 117, 217, wovon die Einzelkörper 117 am meisten bearbeitet wurden und die geringste Querschnittsfläche besitzen. Der unterste Einzelkörper 117 ist vollständig durch einen Klemmteil 33 bedeckt, der sich auch noch teilweise in die benachbarten Einzelkörper 217 erstreckt. Der dem unten links gelegenen Klemmteil 33 gegenüber liegende, oben rechts gelegene Klemmteil 33 ist entsprechend angeordnet, wobei der oben rechts gelegene Einzelkörper 117 noch einen Abschnitt besitzt, der nicht von dem Klemmteil 33 abgedeckt ist. Der in Fig. 3 dargestellte Filterkörper 15, im Querschnitt gesehen, hat eine abgerundete, jedoch unregelmäßige Außengeometrie. Auch hier erstrecken sich die Klemmteile 33 nicht stirnseitig über diejenigen Einzelkörper 17, die außenseitig unbearbeitet sind.

Was die axiale und seitliche Klemmung des Filterkörpers 15 im Gehäuse 1 anbelangt, so gilt bezüglich der Ausführungsform nach Fig. 3 das zu den Fig. 1 und 2 Gesagte.

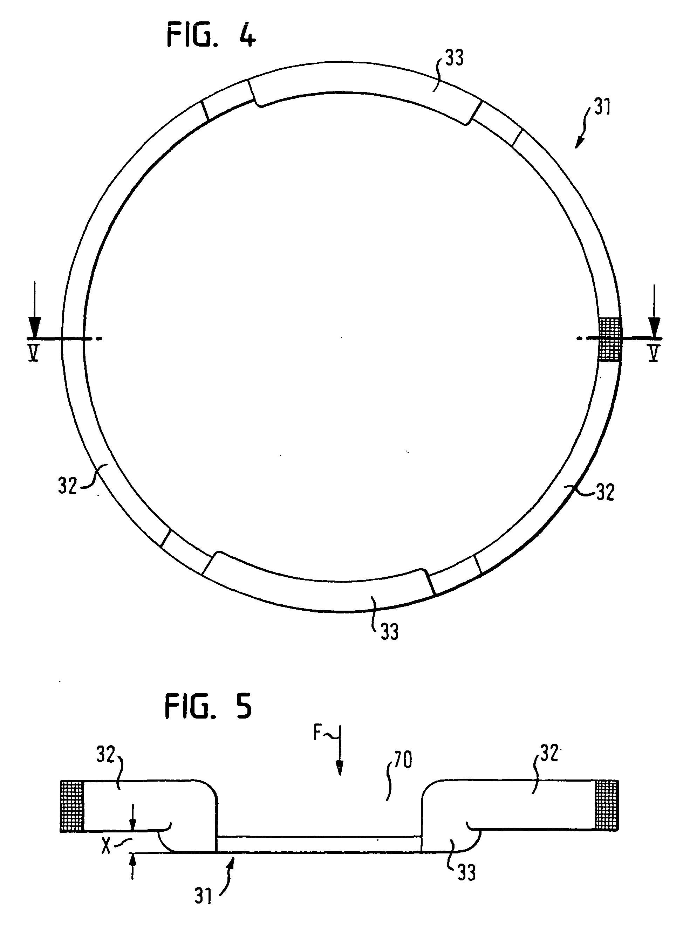

Der in den Fig. 4 und 5 gezeigte Drahtgestrick- bzw. Drahtgewirkring 31 hat ebenfalls zwei Klemmteile 33, wobei die Klemmteile 33 axial um einen Abstand X versetzt zu den Abschnitten 32 des Drahtgestrick- bzw. Drahtgewirkrings 31 angeordnet sind. Die Klemmteile 33 werden dadurch gebildet, daß der Ring 31 durch Aufbringen von axialen Kräften F plastisch verformt wird, so daß sich Einbuchtungen 70 und Ausbuchtungen ergeben, wobei die Ausbuchtungen die Klemmteile 33 bilden.

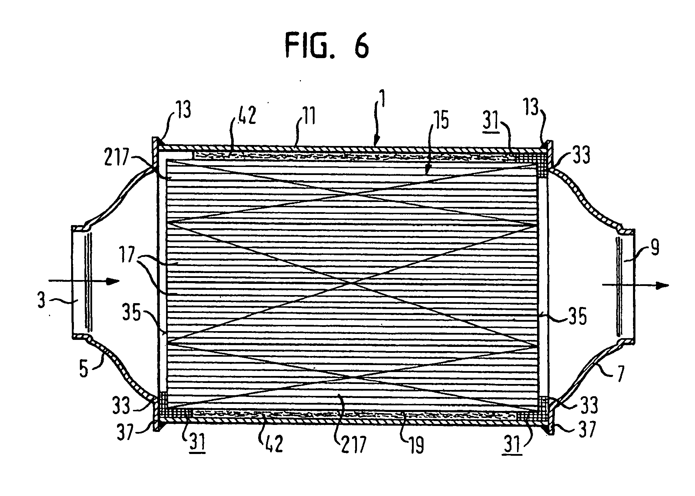

Die in Fig. 6 gezeigten Ausführungsformen (obere und untere Hälfte) entsprechen im Wesentlichen den in Fig. 1 gezeigten Ausführungsformen, weshalb im Folgenden nur noch auf die Unterschiede eingegangen wird und die bereits eingeführten Bezugszeichen auch für funktionsgleiche Teile verwendet werden.

Beide Ausführungsformen nach Fig. 6 zeichnen sich dadurch aus, daß der Filterkörper 15 fast ausschließlich durch eine seitliche Kraft im Gehäuse 1 geklemmt wird. Hierzu wird zuerst die Isolations- oder Quellmatte 42 um den Filterkörper 15 gelegt. Auch der oder die Ringe 31 werden stirnseitig auf den Filterkörper 15 gesteckt. Gemäß der in der oberen Hälfte dargestellten Ausführungsform ist nur ein Ring 31 und dieser an der stromabwertigen Stirnseite 35 vorgesehen, wogegen bei der Ausführungsform nach der unteren Hälfte an beiden Stirnseiten Ringe 31 angeordnet sind. Im nächsten Schritt wird ein Blech zur Bildung der Umfangswand mit einer vorbestimmten Kraft um die Einheit aus Filterkörper 15, Quellmatte 42 und dem oder den Ringen 31 gewickelt. Hierbei wird eine starke seitliche Kraft auf den Filterkörper 15 ausgeübt, durch die er in der Umfangswand 11 und später im Gehäuse 1 gehalten wird. Anschließend werden von beiden Stirnseiten die trichterförmigen Abschnitte 5, 7 angesetzt und mit der Umfangswand 11 verschweißt. Da der oder die Ringe 31 vor dem Verschweißen axial gegenüber der Umfangswand 11 nach außen vorstehen, werden die Klemmteile 33 beim Aufsetzen des zugeordneten trichterförmigen Abschnitts 5, 7 axial komprimiert. Problematisch dabei ist, daß der Ring 31 nach dem Wickeln der Umfangswand 11 aus dem entstehenden Rohr nicht nur axial, sondern auch noch im herausstehenden Abschnitt radial nach außen vorstehen könnte. Beim Aufsetzen der trichterförmigen Abschnitte 5, 7 auf die Stirnseite der Umfangswand 11 könnte der aus dem Rohr herausstehende Teil des Ringes 31 zwischen den Abschnitten 5, 7 und dem Rohr geklemmt werden und später für Undichtigkeiten oder Probleme beim Schweißen sorgen. Aus diesem Grund ist es vorteilhaft, wenn der Ring, wie in den Fig. 4 und 5 gezeigt, zwischen den Abschnitten 32 und den Klemmteilen 33 einen axialen Versatz aufweist.

Alternativ zu der Ausführungsform nach Fig. 6 könnte natürlich auch die Umfangswand 11 nach dem Wickeln an ihren axialen Rändern seitlich nach innen abgekantet werden und damit den oder die Ringe 31 axial positionieren.

## Patentansprüche

1. Vorrichtung zum Reinigen von Fahrzeugabgasen, insbesondere Dieselrußfilter, mit
einem gasdurchströmten Filterkörper (15) mit einer einströmseitigen und einer ausströmseitigen Stirnfläche (35) sowie einer Umfangsfläche (19),
einem den Filterkörper (15) umgebenden Gehäuse (1),
sowie am Außenrand wenigstens einer Stirnfläche (35) zwischen dieser und dem Gehäuse (1) vorgesehenen, umfangsmäßig voneinander beabstandeten, ringsegmentartigen, axial komprimierten Klemmteilen (33),
**dadurch gekennzeichnet, daß**
der Filterkörper (15) aus länglichen, quaderförmigen Einzelkörpern (17, 117, 217, 317) zusammengesetzt und die Umfangsfläche (19) des Filterkörpers (15) mechanisch bearbeitet ist und
daß die Klemmteile (33) im Bereich von solchen am Außenumfang des Filterkörpers (15) liegenden Einzelkörpern (117, 217) positioniert sind, die stärker als andere am Außenumfang des Filterkörpers (15) liegende Einzelkörper (317) bearbeitet sind.

2. Vorrichtung nach Anspruch 1, **dadurch gekennzeichnet, daß** die Klemmteile (33) an gegenüberliegenden Abschnitten des Filterkörpers (15) angeordnet sind.

3. Vorrichtung nach Anspruch 1 oder 2, **dadurch gekennzeichnet, daß** die Klemmteile (33) an solchen am Außenumfang liegenden Einzelkörpern (117, 217) anliegen, die eine geringere Querschnittsfläche als andere am Außenumfang liegende Einzelkörper (317) haben.

4. Vorrichtung nach einem der vorhergehenden Ansprüche, **dadurch gekennzeichnet, daß** die Klemmteile (33) an solchen am Außenumfang liegenden Einzelkörpern (117, 217) liegen, die eine durch die Bearbeitung um mehr als 50% reduzierte Querschnittsfläche haben.

5. Vorrichtung nach einem der vorhergehenden Ansprüche, **dadurch gekennzeichnet, daß** die Klemmteile (33) keine unbearbeiteten Einzelkörper (17) stirnseitig abdecken.

6. Vorrichtung nach einem der vorhergehenden Ansprüche, **dadurch gekennzeichnet, daß** die Klemmteile (33) an denjenigen am Außenumfang liegenden Einzelkörpern (117) anliegen, deren Querschnittsfläche am geringsten ist.

7. Vorrichtung nach einem der vorhergehenden Ansprüche, **dadurch gekennzeichnet, daß** die Klemmteile (33) aus Metallfasern, insbesondere einem Drahtgestrick oder Drahtgewirk sind.

8. Vorrichtung nach einem der vorhergehenden Ansprüchen, **dadurch gekennzeichnet, daß** die Klemmteile (33) mit eingelegten Fasern und/oder Dichtstoffen versehen sind.

9. Vorrichtung nach einem der vorhergehenden Ansprüche, **dadurch gekennzeichnet, daß** die segmentartigen Klemmteile (33) Abschnitte eines Rings (31) sind.

10. Vorrichtung nach Anspruch 9, **dadurch gekennzeichnet, daß** die die Klemmteile (33) verbindenden Abschnitte (32) des Rings (31) seitlich außerhalb der Klemmteile (33) liegen.

11. Vorrichtung nach Anspruch 9 oder 10, **dadurch gekennzeichnet, daß** der Ring (31), mit Blick auf die dem Klemmteil (33) zugeordnete Stirnfläche (35) des Filterkörpers (15), seitlich außerhalb der Stirnfläche (35) liegt.

12. Vorrichtung nach einem der Ansprüche 9 bis 11, **dadurch gekennzeichnet, daß** der Ring (31) einen Abschnitt hat, der sich zwischen der Umfangsfläche (19) und dem Gehäuse (1) erstreckt und zwischen Filterkörper (15) und Gehäuse (1) geklemmt ist.

13. Vorrichtung nach einem der Ansprüche 9 bis 12, **dadurch gekennzeichnet, daß** der Ring (31) axial versetzt zu den Klemmteilen (33) liegt.

14. Vorrichtung nach einem der Ansprüche 9 bis 13, **dadurch gekennzeichnet, daß** der Ring (31) im Bereich der Klemmteile (33) einen axialen Versatz zu den die Klemmteile (33) verbindenden Abschnitten (32) hat.

## Claims

1. A device for cleaning vehicular exhaust gas, in particular a diesel exhaust particle filter, comprising
a filter body (15) which has gas flowing through it and an inflow side end face (35) and an effusion side end face (35), as well as a circumferential wall (19),
a housing (1) surrounding the filter body (15),
as well as ring segment type, axially compressed clamping members (33) provided on the outer edge of at least one end face (35) between the latter and the housing (1),
**characterized in that**
the filter body (15) is composed of elongate, cuboidal individual bodies (17, 117, 217, 317) and the circumferential surface (19) of the filter body (15) is machined and
that the clamping members (33) are positioned in the region of those individual bodies (117, 217) situated on the outer circumference of the filter body (15) which have been more machined than other individual bodies (317) situated on the outer circumference of the filter body (15).

2. The device according to claim 1, **characterized in that** the clamping members (33) are arranged on opposite portions of the filter body (15).

3. The device according to claim 1 or 2, **characterized in that** the clamping members (33) rest against those individual bodies (117, 217) situated on the outer circumference which have a smaller cross-sectional area than other individual bodies (317) situated on the outer circumference.

4. The device according to any of the preceding claims, **characterized in that** the clamping members (33) rest against those individual bodies (117, 217) situated on the outer circumference which have a cross-sectional area that is reduced by more than 50 % due to machining.

5. The device according to any of the preceding claims, **characterized in that** the clamping members (33) do not cover the end face of unmachined individual bodies (17).

6. The device according to any of the preceding claims, **characterized in that** the clamping members (33) rest against those individual bodies (117) situated on the outer circumference whose cross-sectional area is smallest.

7. The device according to any of the preceding claims, **characterized in that** the clamping members (33) are made of metal fibers, in particular of warp-knitted or woven filaments.

8. The device according to any of the preceding claims, **characterized in that** the clamping members (33) are provided with embedded fibers and/or sealing agents.

9. The device according to any of the preceding claims, **characterized in that** the segment type clamping members (33) are portions of a ring (31).

10. The device according to claim 9, **characterized in that** the portions (32) of the ring (31), which connect the clamping members (33), are situated to the side of and outside the clamping members (33).

11. The device according to claim 9 or 10, **characterized in that** the ring (31), seen onto the end face (35) of the filter body (15) associated to the clamping member (33), is situated to the side of and outside the end face (35).

12. The device according to any of the claims 9 to 11, **characterized in that** the ring (31) has a portion which extends between the circumferential surface (19) and the housing (1) and is clamped between the filter body (15) and the housing (1).

13. The device according to any of the claims 9 to 12, **characterized in that** the ring (31) has an axial offset with respect to the clamping members (33).

14. The device according to any of the claims 9 to 13, **characterized in that** in the region of the clamping members (33) the ring (31) has an axial offset with respect to the portions (32) connecting the clamping members (33).

## Revendications

1. Dispositif d'épuration de gaz d'échappement de véhicules, en particulier filtre à particules diesel, comportant
un corps de filtre (15) traversé par un flux de gaz avec une face frontale (35) côté admission et une face frontale (35) côté sortie ainsi qu'une surface périphérique (19),
un boîtier (1) entourant le corps de filtre (15),
ainsi que des éléments de serrage (33) comprimés axialement, en forme de segments annulaire, espacés les uns des autres à la périphérie et prévus sur le bord extérieur d'au moins une face frontale (35) entre celle-ci et le boîtier (1),
**caractérisé en ce que**
le corps de filtre (15) est constitué par des corps individuels (17, 117, 217, 317) allongés de forme parallélépipédique et la surface périphérique (19) du corps de filtre (15) est usinée mécaniquement, et
**en ce que** les éléments de serrage (33) sont positionnés dans la région de ceux des corps individuels (117, 217) situés sur la périphérie extérieure du corps de filtre (15) qui sont plus fortement usinés que d'autres corps individuels (317) situés à la périphérie extérieure du corps de filtre (15).

2. Dispositif selon la revendication 1, **caractérisé en ce que** les éléments de serrage (33) sont agencés sur des tronçons opposés du corps de filtre (15).

3. Dispositif selon la revendication 1 ou 2, **caractérisé en ce que** les éléments de serrage (33) sont en appui sur ceux des corps individuels (117, 217) situés sur la périphérie extérieure qui possèdent une superficie de section plus faible que d'autres corps individuels (317) situés sur la périphérie extérieure.

4. Dispositif selon l'une des revendications précédentes, **caractérisé en ce que** les éléments de serrage (33) sont en appui sur ceux des corps individuels (117, 217) situés sur la périphérie extérieure qui possèdent une superficie de section réduite de plus de 50 % par l'usinage.

5. Dispositif selon l'une des revendications précédentes, **caractérisé en ce que** les éléments de serrage (33) ne recouvrent pas de corps individuel (17) non usiné sur la face frontale.

6. Dispositif selon l'une des revendications précédentes, **caractérisé en ce que** les éléments de serrage (33) sont en appui sur ceux des corps individuels (117) situés sur la périphérie extérieure dont la superficie de section est la plus faible.

7. Dispositif selon l'une des revendications précédentes, **caractérisé en ce que** les éléments de serrage (33) sont en fibres métalliques, en particulier en un tricotage métallique ou en un maillage métallique.

8. Dispositif selon l'une des revendications précédentes, **caractérisé en ce que** les éléments de serrage (33) sont pourvus de fibres et/ou matières d'étanchéité insérées.

9. Dispositif selon l'une des revendications précédentes, **caractérisé en ce que** les éléments de serrage (33) en forme de segments sont des tronçons d'un anneau (31).

10. Dispositif selon la revendication 9, **caractérisé en ce que** les tronçons (32) de l'anneau (31), qui relient les éléments de serrage (33), sont situés latéralement en dehors des éléments de serrage (33).

11. Dispositif selon la revendication 9 ou 10, **caractérisé en ce que** l'anneau (31), avec vue sur la face frontale (35) du corps de filtre (15), qui est associée à l'élément de serrage (33), est situé latéralement en dehors de la face frontale (35).

12. Dispositif selon l'une des revendications 9 à 11, **caractérisé en ce que** l'anneau (31) a un tronçon qui s'étend entre la surface périphérique (19) et le boîtier (1) et qui est serré entre le corps de filtre (15) et le boîtier (1).

13. Dispositif selon l'une des revendications 9 à 12, **caractérisé en ce que** l'anneau (31) est situé en décalage axial par rapport aux éléments de serrage (33).

14. Dispositif selon l'une des revendications 9 à 13, **caractérisé en ce que** l'anneau (31) a, dans la région des éléments de serrage (33), un décalage axial par rapport aux tronçons (32) reliant les éléments de serrage (33).
